# EUROPEAN PATENT APPLICATION

(11) **EP 4 071 191 A1**
(43) Date of publication of application: **12.10.2022**
(21) Application number: 20895661.5
(22) Date of filing: 03.12.2020
(51) Int. Cl.: C08G 18/75, B32B 7/027, B32B 27/40, C08J 5/18

(54) **THERMOPLASTIC POLYURETHANE FILM AND MULTILAYER FILM**

(30) Priority: 06.12.2019 JP 2019221575
(71) Applicant: Nihon Matai Co., Ltd., Tokyo 111-8522 (JP)
(72) Inventor: ARIMA Tomonori, Moriyama City Shiga 5240044 (JP); KOBAYASHI Yuri, Moriyama City Shiga 5240044 (JP)
(74) Representative: Gulde & Partner
(86) International application number: PCT/JP2020/044966
(87) International publication number: WO 2021/112159

(57) **Abstract**

[Problem to be Solved]

A thermoplastic polyurethane film that is capable of achieving a stress relaxation property regardless of the type of polyol, while having good pasting workability, as well as a multilayer film using the same, is provided.

[Solution]

The thermoplastic polyurethane film is constituted by a reaction product obtained by using dicyclohexylmethane diisocyanate (H₁₂MDI). This enables the thermoplastic polyurethane film and the multilayer film to have a good stress relaxation property regardless of the type of polyol, and to have excellent pasting workability.

## Description

### Technical Field

The present invention relates to a thermoplastic polyurethane film suitably used as a painting protective sheet or a surface protective sheet, and to a multilayer film including a surface coating layer formed on one side of the thermoplastic polyurethane film.

### Background Art

Adhesive sheets used as painting protective sheets or surface protective sheets for preventing scratches caused by abrasions and flying stones on the exterior parts of vehicles such as automobiles and for preventing deterioration due to weather are used to protect painted surfaces, headlights, window glass, and other parts of automobiles, and therefore must be pasted even along curved surfaces. For this reason, they are required to have followability and stretchability, and are often based on thermoplastic polyurethane films.

These polyurethane films are sticky, and when used in an outdoor environment, if sand, dust, or other dirt attaches to the surface, the dirt will settle and cannot be removed, and therefore, the above-mentioned protective sheets are generally made into multilayer films by providing dirtpreventive coat layers on the surface of the polyurethane films.

Meanwhile, the objects to be protected, such as automobiles, have many curved surface parts on their exteriors, and it is necessary to stretch the films while pasting them. Depending on the polyurethane film characteristics, excessive stress may be required when stretching the films, or stress to return to the original state may be high, making some films difficult to be pasted. In other words, when pasted on curved surfaces, films that are difficult to be stretched or films that are highly resilient when stretched will not conform to the curved surfaces due to the force of return and may cause wrinkles or other problems. Therefore, polyurethane films are also required to be easy to be stretched and have a low force of return.

Since this high or low level of force of return correlates with the percentage of stress relaxation, the stress relaxation property must be improved in order to paste the films smoothly. In order to obtain the stress relaxation property, polyurethane films are often defined by the type of polyol, such as polyester-based, polycaprolactone-based, and polycarbonate-based (see, for example, Patent Literatures 1 to 6).

In addition, as such thermoplastic films, soft polyvinyl chlorides have often been used. This is because, when plasticizers are added to soften them, the loss tangent (tan δ) exhibits the maximum value (peak value) under an environment of 0 to 60°C, which is at and around normal temperature (see Non Patent Literature 1), and the stress-strain (S-S) curve is linear and gently rising (see Patent Literature 7), resulting in an excellent stress relaxation property.

### Citation List

### Patent Literature

Patent Literature 1: Japanese Patent Laid-Open No. 2005-272558
Patent Literature 2: Japanese Translation of PCT International Application Publication No. 2008-539107
Patent Literature 3: Japanese Patent Laid-Open No. 2015-98574
Patent Literature 4: Japanese Patent Laid-Open No. 2015-52100
Patent Literature 5: Japanese Patent Laid-Open No. 2014-166748
Patent Literature 6: Japanese Patent Laid-Open No. 2018-53193
Patent Literature 7: Japanese Patent Laid-Open No. 2018-188652

### Non Patent Literature

Non Patent Literature 1: "Netto waku porima", Vol. 32, No. 6, 2011, p. 362-367

### Summary of Invention

### Technical Problem

By the way, when using polyurethane films as in Patent Literatures 1 to 6, it is necessary to check the characteristics of those polyurethanes and determine the type of polyol, and there has been no proposal for a polyurethane raw material that provides a stress relaxation property regardless of the type of polyol.

In addition, the surface coating layer also needs to have stretchability to follow polyurethane, but when the stretchability of the surface coating layer is too high, the viscosity is too strong, which makes it easy for dirt to attach to the surface, and stretchability in the range that allows for pasting is required.

On the other hand, the use of soft polyvinyl chlorides is being discouraged in society due to concerns about adverse effects on the human body caused by the dissolution of plasticizers and generation of dioxin during combustion, and in thermoplastic films as well, it has been desired to develop alternative products that exhibit an excellent stress relaxation property equivalent to that of soft polyvinyl chlorides.

A first object of the present invention is to provide a thermoplastic polyurethane film that is capable of achieving a stress relaxation property regardless of the type of polyol, while having good pasting workability, as well as a multilayer film using the same.

In addition, a second object of the present invention is to provide a thermoplastic polyurethane film that exhibits an excellent stress relaxation property equivalent to that of vinyl chloride and can replace vinyl chloride, as well as a multilayer film using the same.

### Solution to Problem

As a result of diligent investigations to solve the above-mentioned problems, the present inventors have come to the findings below.

That is, they have come to a finding that, when a thermoplastic polyurethane film is constituted by a reaction product obtained by using dicyclohexylmethane diisocyanate (H₁₂MDI), it has a good stress relaxation property regardless of the type of polyol, has excellent pasting workability, and even when a surface coating layer is formed thereon, it can be made into a multilayer film with excellent pasting workability.

In addition, they have come to another finding that, when a thermoplastic polyurethane film is constituted by a reaction product obtained by using H₁₂MDI, it exhibits an excellent stress relaxation property on the same level as that of soft polyvinyl chlorides.

The present invention is based on these findings by the present inventors, and the means to solve the above-mentioned problems are as follows.
<1> A thermoplastic polyurethane film comprising a thermoplastic polyurethane that is a reaction product obtained by using dicyclohexylmethane diisocyanate (H₁₂MDI).
<2> The thermoplastic polyurethane film according to <1>, in which, when a value of loss tangent according to JIS K7244-4 is measured by raising a temperature from -60°C to a maximum of 60°C, this measured value satisfies conditions (1) and (2) below:
   (1) a maximum value is exhibited under a temperature environment of 15 to 60°C; and
   (2) a minimum value is exhibited under a temperature environment of 0°C or lower
<3> The thermoplastic polyurethane film according to <2>, in which, when the value of loss tangent according to JIS K7244-4 is measured by raising a temperature from -60°C to a maximum of 60°C, this measured value does not become smaller, but is constant or becomes larger, when a temperature is raised from 0 to 25°C.
<4> The thermoplastic polyurethane film according to any one of <1> to <3>, in which a load (residual stress) 30 seconds after stopping at a state of 40% elongation under a temperature condition of 23°C ± 2°C is 20 N/25 mm or less, and a percentage of stress relaxation 3 minutes after stopping at the state is 25% or more.
<5> The thermoplastic polyurethane film according to any one of <1> to <4>, in which a total light transmittance according to JIS K7361-1 is 90% or more.
<6> The thermoplastic polyurethane film according to any one of <1> to <5>, in which a haze value according to JIS K7136 is 3.0 or less.
<7> A multilayer film comprising a surface coating layer formed on one side of the thermoplastic polyurethane film according to any one of <1> to <6>.
<8> The multilayer film according to <7>, in which the surface coating layer has a urethane bond.
<9> The multilayer film according to <7> or <8>, in which a total light transmittance according to JIS K7361-1 is 90% or more.
<10> The multilayer film according to any of <7> to <9>, in which a haze value according to JIS K7136 is 3.0 or less.
<11> The multilayer film according to any of <7> to <10>, in which the multilayer film is used to protect an adherend having a curved surface.

### Advantageous Effects of Invention

Since the thermoplastic polyurethane film of the present invention comprises a reaction product obtained by using dicyclohexylmethane diisocyanate (H₁₂MDI), a stress relaxation property can be achieved regardless of the type of polyol, and good pasting workability can be achieved.

Since the multilayer film of the present invention uses the thermoplastic polyurethane film of the present invention, good pasting workability can be achieved.

In addition, since the thermoplastic polyurethane film of the present invention has a thermoplastic polyurethane layer comprising a thermoplastic polyurethane that is a reaction product obtained by using H₁₂MDI, the temperature range in which the maximum value of loss tangent is exhibited and the shape exhibited by the stress-strain curve are close to those of soft polyvinyl chlorides, and it exhibits an excellent stress relaxation property on the same level as that of soft polyvinyl chlorides, and can be used as an alternative product thereto.

### Brief Description of Drawings

[Figure 1] Figure 1 shows one form of the layer configuration of a multilayer film of the present invention.
[Figure 2] Figure 2 shows an example of pasting a multilayer film of the present invention on an adherend.
[Figure 3] Figure 3 shows another example of pasting a multilayer film of the present invention on an adherend.
[Figure 4] Figure 4 is a graph showing loss tangent data at - 60 to 60°C for Examples 1 to 4.
[Figure 5] Figure 5 is a graph showing loss tangent data at - 60 to 60°C for Comparative Examples 1 to 3.
[Figure 6] Figure 6 is a graph showing loss tangent data at - 60 to 60°C for Comparative Examples 4 to 6.
[Figure 7] Figure 7 is a graph showing the stress-strain curves for Examples 1 to 4.
[Figure 8] Figure 8 is a graph showing the stress-strain curves for Comparative Examples 1 to 3.
[Figure 9] Figure 9 is a graph showing the stress-strain curves for Comparative Examples 4 to 6.
[Figure 10] Figure 10 is a photograph showing the results of pasting workability of Example 5.
[Figure 11] Figure 11 is a photograph showing the results of pasting workability of Comparative Example 7.

### Description of Embodiments

### (Thermoplastic Polyurethane Film)

In the present invention, the thermoplastic polyurethane is a block copolymer obtained by polymerizing a polyisocyanate, a chain extender, and a polyol. In the present invention, dicyclohexylmethane diisocyanate (hereinafter, referred to as "H₁₂MDI"), which is aliphatic, is selected as the polyisocyanate component. Note that H₁₂MDI is only required to be contained as the main component, and other polyisocyanate components may be contained to the extent that they do not affect the effects of the present invention achieved by H₁₂MDI.

Examples of H₁₂MDI include 4,4'-, 2,4'-, or 2,2'-dicyclohexylmethane diisocyanate, or a mixture or derivative thereof. One of these polyisocyanates may be used alone, or a combination of two or more types thereof may be used.

Examples of the other polyisocyanate components include aliphatic diisocyanates, alicyclic diisocyanates, isocyanate group-terminated compounds resulting from the reaction of polyisocyanates with active hydrogen group-containing compounds, polyisocyanate-modified products resulting from the reaction of polyisocyanates, and polyisocyanates that are partially stabilized with a blocking agent having one active hydrogen in the molecule. Examples of the aliphatic diisocyanates include dodecane diisocyanate and trimethylhexamethylene diisocyanate. Examples of the alicyclic diisocyanates include cyclohexane diisocyanate, dicyclohexylmethane diisocyanate, isophorone diisocyanate, hydrogenated xylylene diisocyanate, norbornanediisocyanatomethyl, and 1,4-bis(isocyanatomethyl)cyclohexane. Examples of the reaction of polyisocyanates include a carbodiimidation reaction. Examples of the blocking agent having one active hydrogen in the molecule include methanol, n-butanol, benzyl alcohol, ethyl acetoacetate, ε-caprolactam, methyl ethyl ketone oxime, phenol, and cresol.

Examples of the chain extender include compounds with a molecular weight of 500 or less. Examples of such compounds include ethylene glycol, diethylene glycol, triethylene glycol, propylene glycol, 1,3-propylene glycol, dipropylene glycol, 1,4-butylene glycol, 1,5-pentanediol, 1,6-hexanediol, and 1,4-bis(2-hydroxyethoxy)benzene. Note that one of these may be used alone, or a combination of two or more types thereof may be used.

There is no particular restriction on the polyol component as long as it is a compound with a molecular weight of about 200 to 10,000 that has two hydroxy groups in one molecule, and examples thereof include polyether diols, polyester diols, and polycarbonate diols.

Specific examples of the polyether diols include polyethylene glycol, polypropylene glycol (PPG), copolymers of ethylene oxide and propylene oxide, and polytetramethylene glycol (PTMG).

Examples of the polyester diols include poly(ethylene adipate) diol, poly(propylene adipate) diol, poly(butylene adipate) diol (PBA), poly(hexamethylene adipate) diol, poly(butylene isophthalate) diol, and poly-ε-caprolactonediol (PCL) .

Examples of the polycarbonate diols include polyhexamethylene carbonate diol (PHC), and co-condensates of polyhexamethylene carbonate diol with other polyester diols, polyether diols, and polyether-ester diols.

The thermoplastic polyurethane is synthesized by known methods such as a one-shot method and a prepolymer method, and can be produced in the form of pellets by known methods such as a batch reaction method and a continuous reaction method.

As commercially available products of the thermoplastic polyurethane, for example, the trade name "ESTANE (R)" series of Lubrizol Corporation, the trade name "Elastollan (R)" series of BASF Japan, the trade name "KRYSTALGRAN" series of Huntsman Corporation, and others can be used.

In the obtained thermoplastic polyurethane film, the load (residual stress) 30 seconds after stopping at a state of 40% elongation under a temperature condition of 23°C ± 2°C is usually 20 N/25 mm or less, preferably 18 N/25 mm or less, and more preferably 16 N/25 mm or less. Usually, when fabricating a multilayer film and pasting it on a curved surface, part of the film is pasted on the adherend, then while stretching the film with one hand, it is brought along the curved surface, and the adherend and the film are closely adhered by a squeegee held in the opposite hand. Therefore, if its residual stress is larger than 20 N/25 mm, the force of pulling back of the film is large when pasting, making it difficult to fix the position of the film with one hand while it is stretched, or causing glue shift, which may make handling difficult.

In the obtained thermoplastic polyurethane film, the percentage of stress relaxation 3 minutes after stopping at a state of 40% elongation under a temperature condition of 23°C ± 2°C is usually 25% or more, preferably 30% or more, and more preferably 35% or more. If the percentage of stress relaxation is smaller than 25%, strain that occurs when fabricating a multilayer film and stretching it for pasting on a curved surface cannot be relaxed, which may cause wrinkles. There is also a risk of floating after pasting the multilayer film.

Note that the load described above can be measured by, for example, cutting the sample to an appropriate size and elongating it by 40% in a commercially available tensile tester, and the percentage of stress relaxation can be determined by calculating the percentage of the load measured after 3 minutes with respect to the load immediately after stopping.

In order to obtain these physical properties, when the temperature in the thermoplastic polyurethane film is raised from -60°C to the maximum of 60°C to measure a change in the value of loss tangent as a function of temperature, the measured value preferably satisfies the conditions (1) to (3) described below. Here, the loss tangent is an index (tan δ) of the viscous element and elastic element of an object based on the relationship between the waveform peak values of the stress and strain phases (sine waves) and the phase difference (strain delay) on the time axis, and it can be measured in accordance with JIS K7244-4.
(1) The maximum value (peak value) is exhibited under a temperature environment of 15 to 60°C, preferably 25 to 50°C.
(2) The minimum value is exhibited under a temperature environment of 0°C or lower.
(3) The value does not become smaller, but is constant or becomes larger, when the temperature is raised from 0 to 25°C.

When the measured value meets the above-mentioned conditions, that is, the waveform of tan δ is gently rising steadily, changes in the physical properties of the film under the environment where pasting operations of the film are performed are small, and the film will have an excellent stress relaxation property. In addition, when the maximum value of tan δ, that is, the glass transition point, is in the range of 15 to 60°C, which is at and around normal temperature, the mobility of molecules constituting the film is low under the environment where pasting operations of the film are performed, and when the film is stretched, low resilience is exhibited, resulting in excellent pasting workability.

Suitable examples of the polyisocyanate component that enables the value of loss tangent of the thermoplastic polyurethane film to satisfy these requirements include the above-mentioned H₁₂MDI.

In other words, in usual cases, it has been considered effective to use a specific thermoplastic polyurethane types derived from a polyol, as the stress relaxation property is considered to vary depending on the thermoplastic polyurethane types due to the used polyol. In contrast, by using H₁₂MDI as the diisocyanate component in the present invention, its reaction product, thermoplastic polyurethane, can provide a good stress relaxation property without consideration of the characteristics as described above even in combination with a variety of polyol components.

In addition, by using H₁₂MDI, the obtained thermoplastic polyurethane layer has the maximum value of loss tangent (tan δ) in an environment of 15 to 60°C, as mentioned above, and its stress-strain (S-S) is linear and gently rising steadily. These characteristics are similar to those of soft polyvinyl chlorides, and the thermoplastic polyurethane film can be an alternative product to soft polyvinyl chlorides, which are being discouraged in society.

In the obtained thermoplastic polyurethane film, the stress value of the film in a state of 10% elongation under a temperature condition of 23°C ± 2°C is preferably 20 N/25 mm or less, and more preferably 15 N/25 mm or less. When this stress value is larger than 20 N/25 mm, the film may be hard, difficult to be stretched, and cause wrinkles, resulting in poor pasting workability.

The hardness of the thermoplastic polyurethane film is not particularly limited, but is usually in the range of Shore A hardness of 70 to Shore D hardness of 65, preferably Shore A hardness of 80 to Shore D hardness of 60, and more preferably Shore A hardness of 85 to 95. When the hardness is larger than Shore D hardness of 65, the load (residual stress) of the film 30 seconds after stopping at a state of 40% elongation and the stress value of the film in a state of 10% elongation are high, and when fabricating a multilayer film and pasting it, the film may be hard and the curved surface followability may not be obtained. When the Shore A hardness is smaller than 70, the firmness is weak and the film may be difficult to be handled during pasting. Note that the Shore A hardness is a standard for measuring the hardness of general rubbers, and the Shore D hardness is a similar standard for rubbers with high hardness exceeding Shore A hardness of 95. Both can be measured using a durometer (spring-type rubber hardness tester) in accordance with JIS K7311.

As for the optical characteristics of the thermoplastic polyurethane film, the total light transmittance is 90% or more, preferably 92% or more, and the haze value is 3.0 or less, preferably 2.0 or less. When the total light transmittance is smaller than 90% and the haze value is larger than 3.0, the film may appear whitish when pasted on glossy painted surfaces such as automobiles. Note that measurements of total light transmittance and haze value can be performed using a haze meter, and total light transmittance and haze value can be measured in accordance with JIS K7361-1 and JIS K7136, respectively.

The thermoplastic polyurethane film can be formed into the form of layers by known methods such as a T-die casting method, a T-die nip forming method, an inflation molding method, and a calendering method, for example, and the T-die nip method is particularly preferred.

When the thermoplastic polyurethane film is formed by the T-die nip method, it can be produced by passing it through a cooling roll along with a separator on one side or both sides of the resin in a molten state that has been extruded from a flat die.

Examples of the material that forms this separator include polyester-based resins such as polyethylene terephthalate film (PET), polyolefin-based resins such as polyethylene (PE) and polypropylene (PP), polyimide (PI), polyether ether ketone (PEEK), and paper.

When the separator cannot be easily released peeled off from a laminated film of the separator and the thermoplastic polyurethane, it is preferable to use a separator whose surface has been subjected to a release treatment. Examples of the method of release treatment include a method for coating the surface of the separator with a silicone-based, fluorine-based, acrylic, melamine-based, alkyd-based, or other release agent, and a method for laminating a polyolefin-based resin such as polyethylene or polypropylene thereon. In particular, a polyethylene terephthalate film treated with a release agent is suitably used. In addition, silicone-based release agents may migrate to the thermoplastic polyurethane layer and interfere with close adhesion or adhesion with the adhesive or the adherend, and therefore, non-silicone-based release agents are preferred.

The thickness of the thermoplastic polyurethane film layer is not particularly limited, but is usually 50 to 500 µm, preferably 100 to 300 µm, and more preferably 100 to 200 µm. When it is thinner than 50 µm, the film may be difficult to be handled during pasting and may be easily scratched by flying stones. When it is thicker than 500 µm, the film may be difficult to be pasted and may not have followability to curved surfaces.

The thermoplastic polyurethane film preferably contains an ultraviolet absorber. When the film contains an ultraviolet absorber, if it is used outdoors, deterioration of the polyurethane layer and deterioration of, in the case where an adhesive or the like is applied to the film for use, the adhesive can be reduced, and the film can be used as an agricultural film that is required to block ultraviolet rays and as a measure to prevent birds and beasts that can visually recognize ultraviolet rays.

There is no particular restriction on the ultraviolet absorber as long as it is conventionally known, and for example, benzotriazole-based, triazine-based, and benzophenone-based ultraviolet absorbers are preferred.

Examples of the benzotriazole-based ultraviolet absorbers include 2-(2'-hydroxy-5'-methylphenyl)benzotriazole, 2-(2'-hydroxy-5'-methylphenyl)-5,6-dichlorobenzotriazole), 2-(2'-hydroxy-5'-t-butylphenyl)benzotriazole, 2-(2'-hydroxy-3'-methyl-5'-t-butylphenyl)benzotriazole, 2-(2'-hydroxy-3',5'-di-t-butylphenyl)-5-chloro-benzotriazole, 2-(2'-hydroxy-5'-phenylphenyl)-5-chlorobenzotriazole, 2-(2'-hydroxy-3',5'-dit-butylphenyl)-5-chlorobenzotriazole, 2-(2'-hydroxy-3'-t-butyl-5'-methylphenyl)-5-chlorobenzotriazole, 2-(2'-hydroxy-3',5'-di-t-amylphenyl)benzotriazole, 2-(2'-hydroxy-3',5'-dit-butylphenyl)benzotriazole, 2-(2'-hydroxy-5'-t-octylphenyl)benzotriazole, 2-{2'-hydroxy-3'-(3",4",5",6"-tetrahydrophthalimidomethyl)-5'-methylphenyl}benzotriazole, and 2-{2-hydroxy-3,5-bis(a,a'-dimethylbenzyl)phenyl}-2-hydroxybenzotriazole, as well as mixtures, modified products, polymerized products, and derivatives thereof.

Examples of the triazine-based ultraviolet absorbers include 2-(4,6-diphenyl-1,3,5-triazin-2-yl)-5-[(hexyl)oxy]-phenol, 2-[4-[(2-hydroxy-3-dodecyloxypropyl)oxy]-2-hydroxyphenyl]-4,6-bis(2,4 dimethylphenyl)-1,3,5-triazine, 2-[4-[(2-hydroxy-3-tridecyloxypropyl)oxy]-2-hydroxyphenyl]-4,6-bis(2,4dimethylphenyl)-1,3,5-triazine, and 2,4-bis(2,4-dimethylphenyl)-6-(2- hydroxy-4-iso-octyloxyphenyl)-s-triazine, as well as mixtures, modified products, polymerized products, and derivatives thereof.

Examples of the benzophenone-based ultraviolet absorbers include 2,3'-dihydroxy-4,4'-dimethoxybenzophenone, 2,2'-dihydroxy-4-methoxybenzophenone, and 2,2',4,4'-tetrahydroxybenzophenone.

In the thermoplastic polyurethane film, it is also preferable to use these ultraviolet absorbers in combination with a light stabilizer or antioxidant.

Examples of the light stabilizer include hindered amine light stabilizers such as poly[{6-(1,1,3,3-tetramethylbutyl)amino-1,3,5-triazine-2,4-diyl}{(2,2,6,6-tetramethyl-4-piperidyl)imino}hexamethylene {(2,2,6,6-tetramethyl-4-piperidyl)imino}], dimethyl succinate-1-(2-hydroxyethyl)-4-hydroxy-2,2,6,6-tetramethylpiperidine polycondensate, and bis(1-octyloxy-2,2,6,6-tetramethyl-4-piperidyl) sebacate.

As the antioxidant, phenolic antioxidants, phosphoric acid-based antioxidants, sulfur-based antioxidants, and others can be used, and examples thereof include hindered phenolic antioxidants such as the trade names Irganox 1010 and Irganox 1076 manufactured by BASF Japan, and phosphorusbased antioxidants such as the trade name Adekastab PEP8 manufactured by ADEKA Corporation.

In the thermoplastic polyurethane film, the light transmittance, calculated in accordance with JIS S3107 from data measured with an automatic recording spectrophotometer in accordance with JIS R3106, is 25% or less for the transmittance at a wavelength of 300 to 380 nm, preferably 15% or less, and more preferably 10% or less.

### (Multilayer Film)

The multilayer film of the present invention at least has a layer made of the thermoplastic polyurethane film of the present invention (hereinafter, referred to as "thermoplastic polyurethane layer") and a surface coating layer formed on one side of the thermoplastic polyurethane layer to coat the surface thereof.

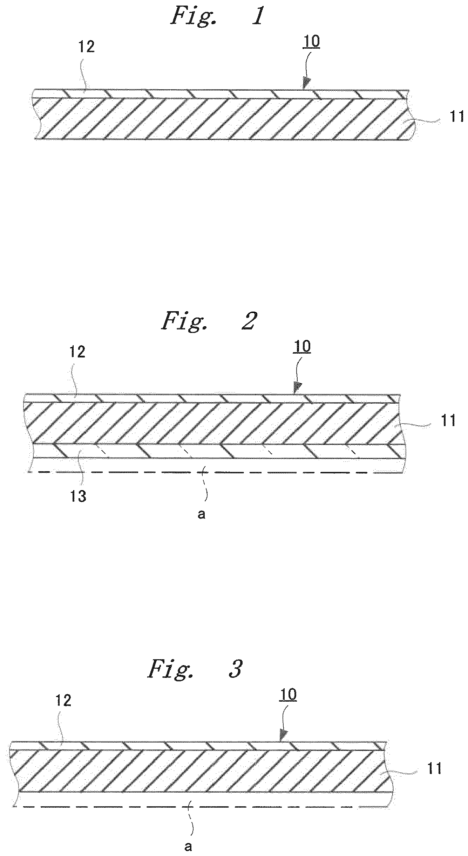

Figure 1 is a diagram showing an example of one form of the layer configuration of the multilayer film of the present invention, Figure 2 is a diagram showing an example of pasting the multilayer film of the present invention on an adherend, and Figure 3 is a diagram showing another example of pasting the multilayer film of the present invention on an adherend.

A multilayer film 10 shown in Figure 1 is constituted by a central thermoplastic polyurethane layer 11 and a surface coating layer 12 formed on the surface thereof.

When pasting the multilayer film 10 on the object to be protected, the thermoplastic polyurethane layer 11 and the surface coating layer 12 are used as the base material, and as shown in Figure 2, an adhesive layer 13 is provided on the opposite side of the thermoplastic polyurethane surface without the surface coating layer, and the base material layer is pasted on an adherend a. In this way, it is used for preventing scratches and deterioration of objects to be protected including the exterior parts of vehicles, such as painted surfaces, headlights, window glass, and other parts of automobiles, for example.

In addition, since polyurethane is thermoplastic and adhesiveness can also be obtained by thermal melting, the multilayer film 10 can also be pasted on the adherend a for use while directly thermally melting it, without providing an adhesive layer, as shown in Figure 3.

### <Thermoplastic Polyurethane Layer>

The thermoplastic polyurethane layer in the present invention is the thermoplastic polyurethane film of the present invention, and the details have already been mentioned.

### <Surface Coating Layer>

The surface coating layer in the present invention usually contains a urethane bond in the main chain. If the surface coating layer contains a urethane bond, it is easier for the surface coating layer to follow elongation of the thermoplastic polyurethane layer when pasted on a curved surface, and cracks of the surface coating layer can also be prevented when the film is elongated.

The stretchability of the surface coating layer can be confirmed by elongating the multilayer film. Specifically, it can be confirmed by cutting into the form of strips the multilayer film obtained by forming a surface coating layer on a thermoplastic polyurethane layer, fixing the strip to a tensile testing machine, elongating it, and then measuring the elongation at which cracks begin to occur in the surface coating layer (crack elongation of surface coating layer). The crack elongation of the surface coating layer is not particularly limited, but is usually 60% or more, preferably 80% or more, and more preferably 100% or more.

There is no particular restriction on the film-forming resin composition used for the surface coating layer as long as it contains a urethane bond, and a two-component curable type obtained by mixing a polyisocyanate compound and a polyol compound at the time of use is preferred, and a thermosetting type is more preferred.

Examples of the isocyanate compound include aliphatic diisocyanates, cyclic aliphatic diisocyanates, and tri- or higher-functional isocyanate compounds. Examples of the aliphatic diisocyanates include lysine diisocyanate, hexamethylene diisocyanate, and trimethylhexane diisocyanate. Examples of the cyclic aliphatic diisocyanates include hydrogenated xylylene diisocyanate, isophorone diisocyanate, methylcyclohexane-2,4-(or 2,6)-diisocyanate, 4,4'-methylenebis(cyclohexyl isocyanate), and 1,3-(isocyanatomethyl)cyclohexane. Examples of the tri- or higher-functional isocyanate compounds include lysine triisocyanate.

Examples of the isocyanate compound may also include isocyanate polymers, such as so-called isocyanurate products, biuret products, adduct products, and allophanate products, and isocyanate compounds added to polyhydric alcohols or low molecular weight polyester resins.

Note that the isocyanate compound may be in the form of a so-called block isocyanate as long as it reacts with the diol.

The polyol compound is preferably at least any one selected from the group consisting of polycaprolactone polyols, polycaprolactam polyols, polycarbonate polyols, polyester polyols, polyether polyols, acrylic polyols, and fluorinated polyols.

Examples of the film-forming resin composition also include block polymers in which a polyol compound is copolymerized with a fluorine component, a silicone component, and other components, graft polymers in which a fluorine component, a silicone component, and other components are bonded as side chains, and block-graft polymers that combine them.

To the film-forming resin composition used for the surface coating layer, known diluent solvents usually used may be added as appropriate. There is no particular restriction on these diluent solvents, and suitable examples thereof include methyl isobutyl ketone (MIBK), ethyl acetate, butyl acetate, methyl ethyl ketone (MEK), and toluene.

Commercially available products of the coating film-forming resin composition used for the surface coating layer are commercially available from, for example, Dainichiseika Color & Chemicals Mfg. Co., Ltd., Tokushiki Co., Ltd., Arakawa Chemical Industries, Ltd., and others.

The surface coating layer can be formed by applying a film-forming resin composition (containing solvent) to the surface of the thermoplastic polyurethane layer, drying the solvent and water, and curing it by known methods.

Examples of the method for curing include thermal curing, light curing, electron beam curing, moisture curing, and oxidative curing. Here, light curing can be performed by UV curing, where ultraviolet rays are used for curing, but when the multilayer film is used outdoors, it is necessary to use a weathering agent such as an ultraviolet absorber, and thus the use of UV curing may be restricted. Therefore, among the above, thermal curing is particularly preferred, in which the resin composition is heated to form a crosslinked structure and cured.

There is no particular restriction on the method for application, and the application can be performed using known coating apparatuses such as bar coaters, spray coaters, air knife coaters, kiss roll coaters, metaling bar coaters, gravure roll coaters, reverse roll coaters, dip coaters, and die coaters, for example. There is no particular restriction on the method for drying, either, and known drying technologies for film coating can be used as appropriate, for example.

The temperature and time for thermal curing can be set as appropriate to the extent that the thermoplastic polyurethane layer is not deformed. The temperature is, for example, 40 to 120°C, and the time is, for example, 10 minutes to 1 week. Examples of the method for thermal curing may include methods using hot air, a drying furnace (dryer) in a known coating machine, and an aging room.

There is no particular limitation on the thickness of the surface coating layer, and it is preferably 3 to 50 µm, and more preferably 5 to 20 µm. When the thickness is less than 3 µm, the surface coating layer may not achieve the desired performance, and when the thickness is thicker than 50 µm, the surface coating layer may not follow elongation of the thermoplastic polyurethane layer when pasted on a curved surface, causing the surface coating layer to be cracked.

For the purpose of protecting the surface coating layer and imparting smoothness thereto, it is preferable that a separator be pasted on the surface coating layer.

Examples of the material that forms the separator include polyester-based resins such as polyethylene terephthalate film (PET), polyolefin-based resins such as polyethylene (PE) and polypropylene (PP), polyimide (PI), polyether ether ketone (PEEK), and paper.

It is preferable to use a separator whose surface has been subjected to a treatment. Examples of the method of treatment include a method for coating the surface of the separator with a silicone-based, fluorine-based, acrylic, melamine-based, alkyd-based, or other release agent, and a method for laminating a polyolefin-based resin such as polyethylene or polypropylene thereon. In particular, a polyethylene terephthalate film treated with a release agent is suitably used.

It is desirable that the surface of the separator be smooth. The surface roughness Ra of the surface of the separator that is in contact with the surface coating layer is preferably 20 nm or less, and still more preferably 15 nm or less. When this surface roughness Ra is larger than 20 nm, the film may appear whitish when pasted on glossy painted surfaces such as automobiles.

Whether or not the film appears whitish after pasting can be evaluated not only by visual observation but also by reflection haze. The reflection haze can be measured with a surface analyzer "Rhopoint IQ-S" manufactured by Konica Minolta Japan, Inc. or other devices. The reflection haze is preferably 2.0 (%) or less, and more preferably 1.5 or less.

### <Adhesive Layer>

When an adhesive layer is provided for use, known adhesives can be used. As the adhesive, general adhesives such as acrylic adhesives, rubber-based adhesives, silicone-based adhesives, polyester-based adhesives, and urethanebased adhesives can be used. Among the above, acrylic adhesives that can demonstrate suitable adhesive force, durability, and other properties are preferred.

Also, in addition to the above-mentioned components, materials that can usually be added to the above-mentioned components, such as a flame retardant, a heat resistance improver, a plasticizer, a lubricant, an antistatic agent, an electroconductivity imparting agent, a colorant, inorganic and organic fillers, a fibrous reinforcing agent, and a reaction retarder, may be added to the thermoplastic polyurethane layer, the surface coating layer, and the adhesive layer to the extent that they do not affect the physical properties.

In order for the optical characteristics of the multilayer film of the present invention not to affect the visibility of the object to be protected, the total light transmittance is preferably 90% or more and the haze value is preferably 3.0 or less. Note that measurements of total light transmittance and haze value can be performed using a haze meter, and total light transmittance and haze value can be measured in accordance with JIS K7361-1 and JIS K7136, respectively.

Since the multilayer film of the present invention uses the thermoplastic polyurethane layer of the present invention, it has an excellent stress relaxation property. Furthermore, since the multilayer film of the present invention has the surface coating layer containing a urethane bond, moderate stretchability is obtained and good followability to the thermoplastic polyurethane layer is achieved, allowing smooth pasting on the object to be protected.

Therefore, the multilayer film of the present invention can be widely used to protect adherends having curved surfaces, not only as painting protective sheets or surface protective sheets for preventing scratches caused by abrasions and flying stones on the exterior parts of vehicles such as automobiles and for preventing deterioration due to weather, but also as films that are pasted on curved surface parts of flexible liquid crystals and other devices to protect the screen.

### Examples

Hereinafter, Examples of the present invention will be described, but the present invention is not limited to the Examples described below.

### Examination 1. Physical Properties of Thermoplastic Polyurethane Layer

At first, the present inventors examined how the physical properties of the resulting thermoplastic polyurethane films are changed depending on the polyisocyanate component used, as described below.

### [Preparation of Thermoplastic Polyurethane Film]

### (Example 1)

A thermoplastic polyurethane, produced by a copolymerization reaction of dicyclohexylmethane diisocyanate as H₁₂MDI of the polyisocyanate component and poly-ε-caprolactonediol as the polyol component, was fed to an extruder, melted and kneaded, and then extruded from a T-die attached to the tip of the extruder. Both sides of the extrudate were nipped in a state sandwiched between PET films as the separator to fabricate a thermoplastic polyurethane film (thermoplastic polyurethane layer) of Example 1 in the form of a layer with a thickness of 150 µm.

### (Example 2)

A thermoplastic polyurethane film (thermoplastic polyurethane layer) of Example 2 was fabricated in the same manner as in Example 1 except that the polyol component was changed to polyhexamethylene carbonate diol (PHC).

### (Example 3)

A thermoplastic polyurethane film (thermoplastic polyurethane layer) of Example 3 was fabricated in the same manner as in Example 1 except that the polyol component was changed to polyethylene glycol.

### (Example 4)

A thermoplastic polyurethane film (thermoplastic polyurethane layer) of Example 4 was fabricated in the same manner as in Example 1 except that the polyol component was changed to poly(ethylene adipate) diol.

### (Comparative Example 1)

A thermoplastic polyurethane film (thermoplastic polyurethane layer) of Comparative Example 1 was fabricated in the same manner as in Example 1 except that the polyisocyanate component was changed to hexamethylene diisocyanate (HDI).

### (Comparative Example 2)

A thermoplastic polyurethane film (thermoplastic polyurethane layer) of Comparative Example 2 was fabricated in the same manner as in Example 3 except that the polyisocyanate component was changed to hexamethylene diisocyanate (HDI).

### (Comparative Example 3)

A thermoplastic polyurethane film (thermoplastic polyurethane layer) of Comparative Example 3 was fabricated in the same manner as in Example 2 except that the polyisocyanate component was changed to hexamethylene diisocyanate (HDI).

### (Comparative Example 4)

A thermoplastic polyurethane film (thermoplastic polyurethane layer) of Comparative Example 4 was fabricated in the same manner as in Example 1 except that the polyisocyanate component was changed to 1,4-hydrogenated xylylene diisocyanate (1,4H₆XDI).

### (Comparative Example 5)

A thermoplastic polyurethane film (thermoplastic polyurethane layer) of Comparative Example 5 was fabricated in the same manner as in Example 3 except that the polyisocyanate component was changed to 1,4-hydrogenated xylylene diisocyanate (1,4H₆XDI).

### (Comparative Example 6)

A thermoplastic polyurethane film (thermoplastic polyurethane layer) of Comparative Example 6 was fabricated in the same manner as in Example 2 except that the polyisocyanate component was changed to 1,4-hydrogenated xylylene diisocyanate (1,4H₆XDI).

### [Measurement of Various Physical Properties]

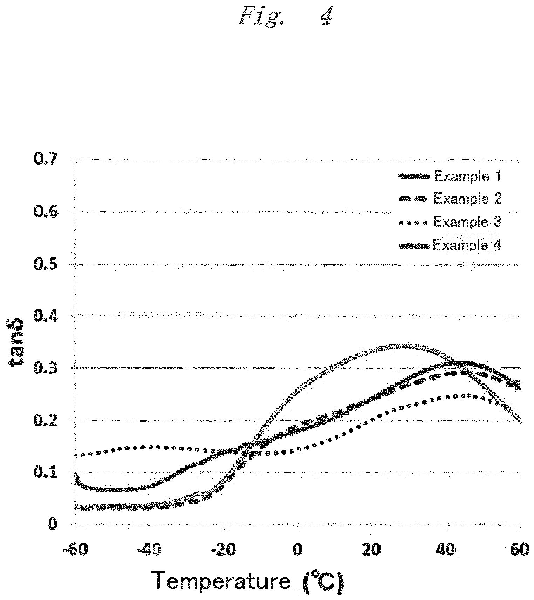

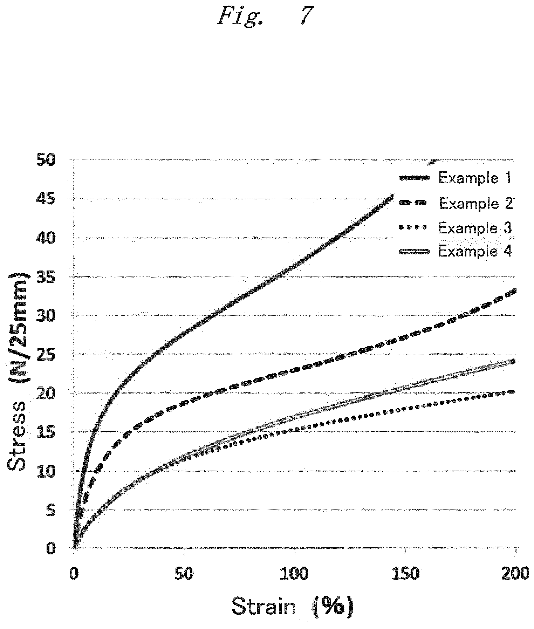

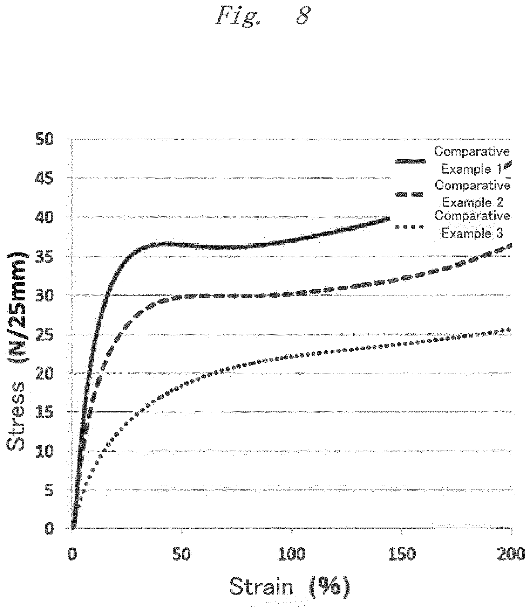

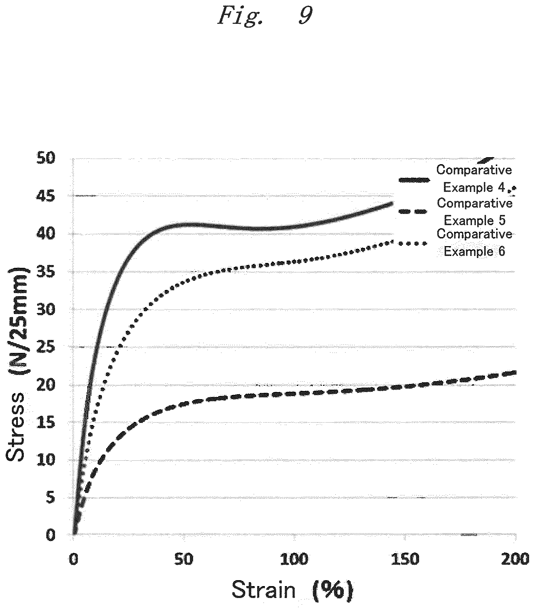

For each of the fabricated thermoplastic polyurethane film samples, various physical properties described below were measured. Note that the hardness was measured using a durometer (spring-type rubber hardness tester) in accordance with JIS K7311, as previously mentioned. The results are shown in Table 1 and Table 2. In addition, changes in the loss tangent as a function of temperature are shown in the graphs of Figure 4 to Figure 6. Furthermore, stress-strain curves are shown in the graphs of Figure 7 to Figure 9.

### <Loss Tangent>

The sample for measurement was cut into a length of 3 cm and a width of 5 mm, and the loss tangent tan δ was measured while raising the temperature in the range of -60°C to the maximum of 60°C, using a dynamic viscoelasticity measuring apparatus (DMAQ850: manufactured by TA Instruments Japan Inc.). In detail, the storage modulus (E') and the loss modulus (E") were measured in accordance with JIS K7244-4 at a temperature raising rate of 3°C/min, at a frequency of 3 Hz, in tensile mode, and the loss tangent tan δ was calculated based on the expression represented by loss tangent tan δ = (E")/(E'). In addition, the maximum value and minimum value at that time, as well as the temperatures (peak temperatures) at which they were exhibited, were recorded. Furthermore, for Examples 1 to 4 and Comparative Example 6, the numerical value obtained by dividing the maximum value by the minimum value, and the temperature difference between the temperature at which the maximum value was exhibited and the temperature at which the minimum value was exhibited were recorded.

### <Stress Relaxation Property>

The sample for measurement was cut into a width of 25 mm and a length of 150 mm, and fixed to a tensile tester (Autograph AG-X: manufactured by Shimadzu Corporation) so that the distance between the chucks was 100 mm. Subsequently, the sample was tensioned at a speed of 200 mm/min under a temperature condition of 23°C ± 2°C. The tensioning was stopped when the distance between the chucks reached 140 mm and the sample was in a state of 40% elongation (elongated state with 1.4 times the initial length), and the load (residual stress) was measured in N units 30 seconds after the stopping.

In addition, the load 3 minutes after the stopping was also measured in the same manner, and the percentage with respect to the load immediately after the stopping was calculated.

### <Tensile Characteristics>

The sample for measurement was cut into a width of 25 mm and a length of 100 mm, and fixed to a tensile tester (Autograph AG-X: manufactured by Shimadzu Corporation) so that the distance between the chucks was 50 mm. Subsequently, the sample was tensioned at a speed of 300 mm/min under a temperature condition of 23°C ± 2°C, and the stress in a state of 10% elongation was measured in N units.

Also, the stress-strain (S-S) curve for the range that the displacement (strain) (%) of the distance between the chucks is from 0% to 200% was created.

### <Optical Characteristics>

While measuring the total light transmittance (%) in accordance with JIS K7361-1:1997, the haze value (%) was also measured in accordance with JIS K7136:2000, using a haze meter (NDH7000: manufactured by Nippon Denshoku Industries Co., Ltd.

**[Table 1]**

| | | | | | Example1 | | Example2 | | Example3 | | Example4 | |
|---|---|---|---|---|---|---|---|---|---|---|---|---|
| Configration | Thermoplastic polyurethane layer | Isocyanate | | - | H₁₂MDI | | H₁₂MDI | | H₁₂MDI | | H₁₂MDI | |
| | | Polyol | | - | Caprolactone | | Polycarbonate | | Ether | | Adipate | |
| | | Hardness | | Shore A | | 95 | | 90 | | 88 | | 90 |
| | | Thickness | | µm | | 150 | | 150 | | 150 | | 150 |
| Thermoplastic polyurethane layer physical properties | | Loss tangent | tanδmaximum value(temperature) | -/°C | 0,31 | (44) | 0,29 | (45) | 0,25 | (46) | 0,34 | (29) |
| | | | tanδminimum value(temperature) | -/°C | 0,07 | (-50) | 0,03 | (-60) | 0,13 | (-60) | 0,03 | 59) |
| | | | Maximum value at 0 to 60°C/minimum value at - 60 to 60°C | - | | 4,4 | | 9,7 | | 1,9 | | 11,3 |
| | | | Temperature difference between maximum value and minimum value | °C | | 94 | | 105 | | 106 | | 88 |
| | | Stress relaxation property | 40% and 3 min | % | | 39,3 | | 52,6 | | 44,1 | | 42,1 |
| | | | 40% and 30 sec | N/25mm | | 14,5 | | 10,2 | | 9,4 | | 7,4 |
| | | Tensile characteristics | 10%Mo | N/25mm | | 14,9 | | 11,5 | | 7,9 | | 5,4 |
| | | Optical characteristics | Total light transmittance | % | | 92,30 | | 92,05 | | 92,36 | | 91,96 |
| | | | Haze value | % | | 1,37 | | 1,70 | | 1,54 | | 1,35 |

**[Table 2]**

| | | | | | Comparative Example1 | Comparative Example2 | Comparative Example3 | Comparative Example4 | Comparative Example5 | Comparative Example6 |
|---|---|---|---|---|---|---|---|---|---|---|
| Configration | Thermoplastic polyurethane layer | Isocyanate | | - | HDI | HDI | HDI | 1,4H₆XDI | 1,4H₆XDI | 1,4H₆XDI |
| | | Polyol | | - | Caprolactone | Ether | Polycarbonate | Caprolactone | Ether | Polycarbonate |
| | | Hardness | | Shore A | 90 | 90 | 85 | 95 | 85 | 95 |
| | | Thickness | | µm | 150 | 150 | 150 | 150 | 150 | 150 |
| Thermoplastic polyurethane layer physical properties | | Loss tangent | tanδmaximum value(temperature) | -/°C | 0,26 (-21) | 0,23 (-45) | 0,65 (-8) | 0,23 (-2) | 0,37 (-43) | 0,24 (12) |
| | | | tanδminimum value at -60 to 60°C(temperature) | -/°C | 0,02 (-60) | 0,04 (59) | 0,02 (-45) | 0,02 (-55) | 0,04 (44) | 0,02 (-41) |
| | | | Maximum value at 0 to 60°C/ minimum value at -60 to 60°C | - | - | - | - | - | - | 12,0 |
| | | | Temperature difference between maximum value and minimum value | °C | - | - | - | - | - | 53 |
| | | Stress relaxation property | 40% and 3 min | % | 26,5 | 24,2 | 17,4 | 28,4 | 22,8 | 33,0 |
| | | | 40% and 30 sec | N/25mm | 27,0 | 21,9 | 12,0 | 30,2 | 12,9 | 21,8 |
| | | Tensile characteristics | 10%Mo | N/25mm | 24,1 | 16,9 | 7,9 | 24,5 | 8,7 | 16,6 |
| | | Optical characteristics | Total light transmittance | % | 91,85 | 92,13 | 92,62 | 92,13 | 92,67 | 92,38 |
| | | | Haze value | % | 1,74 | 1,49 | 1,39 | 1,36 | 1,30 | 1,53 |

As shown in Table 1 and Table 2, in the inventive thermoplastic polyurethane layers of Examples 1 to 4, the percentage (%) of the load after 3 minutes with respect to the load immediately after the stopping was 39% or more, which is a value about 1.2 to 3 times higher than the numerical values of the thermoplastic polyurethane layers of Comparative Examples. Therefore, it was found that, when H₁₂MDI is used as the polyisocyanate component, no matter what polyol component is combined with it, their reaction product, polyurethane, has an excellent stress relaxation property.

In addition, both the value of residual stress in the stress relaxation property and the stress value in the tensile characteristics are 15 N/25 mm or less for the present invention, while many of Comparative Examples exceed 20 N/25 mm, and it can be presumed that the present invention provides good pasting workability even when a surface coating layer is formed to fabricate a multilayer film. Note that the hardness was in a suitable range for all examples, and the optical characteristics were also good in all examples, with a total light transmittance of 90% or more and a haze value of 2.0 or less.

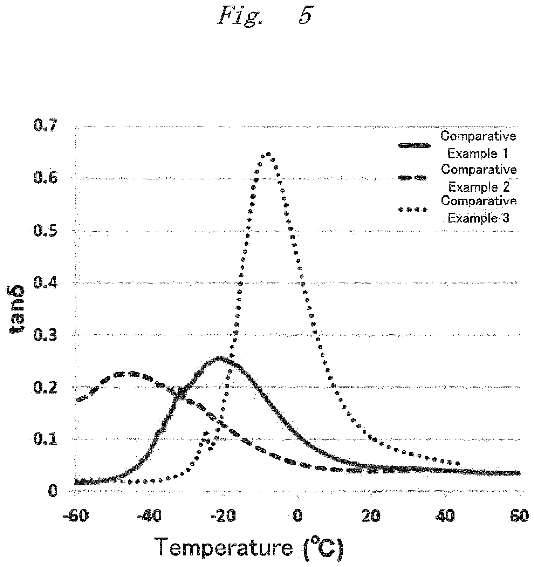

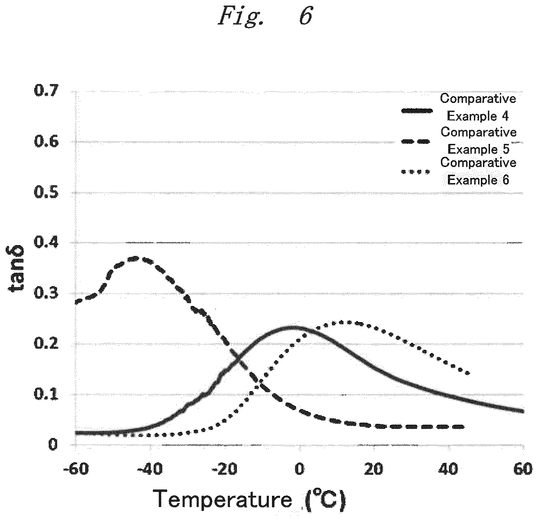

Furthermore, as shown in Figure 4, for all of the thermoplastic polyurethane layers of Examples 1 to 4, the tan δ value of loss tangent exhibited the maximum value at a temperature around normal temperature in the range of 15 to 60°C, or more specifically in the range of 25 to 50°C, and also exhibited the minimum value at 0°C or lower, resulting in a waveform that gently rises steadily. In contrast, as shown in Figure 5 and Figure 6, many of the thermoplastic polyurethane layers of Comparative Examples exhibited the maximum value at 0°C or lower, and even Comparative Example 6, which had the highest peak temperature at which the maximum value was exhibited, still remained at 12°C.

From the above, it can be considered that, in the thermoplastic polyurethane film of the present invention, the maximum value of loss tangent is exhibited at a temperature around normal temperature in the range of 15 to 60°C, the minimum value is exhibited at 0°C or lower, and the value does not become smaller, but is constant or becomes larger, when the temperature is raised from 0 to 25°C, thereby demonstrating an excellent stress relaxation property regardless of the combination with the polyol component.

In addition, for Examples 1 to 4 and Comparative Example 6, which exhibited the maximum value in the range of 0°C to 60°C and also exhibited the minimum value at 0°C or lower, when comparing the numerical value obtained by dividing the maximum value by the minimum value and the temperature difference between the temperature at which the maximum value was exhibited and the temperature at which the minimum value was exhibited, the numerical value obtained by dividing the maximum value by the minimum value was smaller for Examples 1 to 4, while the temperature difference between the temperature at which the maximum value was exhibited and the temperature at which the minimum value was exhibited was larger for Examples 1 to 4. Therefore, it can be considered that, while a change in the value of tan δ is small, the temperature between the maximum value and the minimum value is large, which indicates a tendency for the value of tan δ to be increased gently, and as a result, contributes to a good stress relaxation property.

Furthermore, as shown in Figure 7 to Figure 9, for the inventive thermoplastic polyurethane layers of Examples 1 to 4, the S-S curve showed a shape that was more linear and gently rising steadily than that of Comparative Examples.

Here, for soft polyvinyl chlorides, which are known to have an excellent stress relaxation property, it is known that, when the loss tangent is measured in a temperature environment of about -60°C to 60°C, the maximum value is exhibited at a temperature around normal temperature in the range of 0 to 60°C and its value is not significantly different from the minimum value (see "Netto waku porima", Vol. 32, No. 6, (2011), p. 363, Figure 6). It is also known that, when the S-S curve is created, it shows a shape that is linear and gently rising steadily (see Japanese Patent Laid-Open No. 2018-188652, Figure 3).

From the above, it was found that the thermoplastic polyurethane film of the present invention can demonstrate an excellent stress relaxation property on the same level as that of soft polyvinyl chlorides, while reducing effects on the human body, and can be used as an alternative product to them.

### Examination 2. Physical Properties of Multilayer Film

Next, the present inventors examined, when a surface coating layer was further formed to make a multilayer film (base material layer), how the physical properties are changed depending on the polyisocyanate component used, as described below.

### [Preparation of Multilayer Film]

### (Example 5)

As a coating liquid for forming a coating film of the surface coating layer, a coating liquid of a fluorine-modified acrylic urethane resin A was prepared by adding to a fluorine-modified acrylic polyol (solid content 30%) an isocyanate-based curing agent (solid content 60%) and methyl isobutyl ketone (MIBK) as a diluent solvent and compounding them in a mass ratio of 38:23:39.

The PET film on one side of the thermoplastic polyurethane layer fabricated in Example 1 was peeled off, the above coating liquid for the surface coating layer was applied thereto so that the thickness after drying would be 10 µm, thereby fabricating a multilayer film (base material layer) of Example 5.

### (Example 6)

As a coating liquid for forming a coating film of the surface coating layer, a coating liquid of a fluorine-modified acrylic urethane resin B was prepared by adding to a fluorine-modified acrylic polyol (solid content 30%) an isocyanate-based curing agent (solid content 60%) and methyl isobutyl ketone (MIBK) as a diluent solvent and compounding them in a mass ratio of 44:20:36.

The PET film on one side of the thermoplastic polyurethane layer fabricated in Example 1 was peeled off, the above coating liquid for the surface coating layer was applied thereto so that the thickness after drying would be 10 µm, thereby fabricating a multilayer film (base material layer) of Example 6.

### (Example 7)

As a coating liquid for forming a coating film of the surface coating layer, a coating liquid of a modified acrylic urethane resin was prepared by adding to a modified acrylic polyol (solid content 50%) an isocyanate-based curing agent (solid content 45%) and ethyl acetate as a diluent solvent and compounding them in a mass ratio of 32:20:48.

The PET film on one side of the thermoplastic polyurethane layer fabricated in Example 1 was peeled off, the above coating liquid for the surface coating layer was applied thereto so that the thickness after drying would be 10 µm, thereby fabricating a multilayer film (base material layer) of Example 7.

### (Example 8)

As a coating liquid for forming a coating film of the surface coating layer, a coating liquid of a silicon-modified acrylic urethane resin was prepared by adding to a silicon-modified acrylic polyol (solid content 33%) an isocyanate-based curing agent (solid content 75%) and methyl ethyl ketone (MEK) as a diluent solvent and compounding them in a mass ratio of 55:9:36.

The PET film on one side of the thermoplastic polyurethane layer fabricated in Example 1 was peeled off, the above coating liquid for the surface coating layer was applied thereto so that the thickness after drying would be 10 µm, thereby fabricating a multilayer film (base material layer) of Example 8.

### (Example 9)

As a coating liquid for forming a coating film of the surface coating layer, a coating liquid of a silicon-fluorine copolymerized resin was prepared by adding to a silicon-fluorine copolymerized resin having a functional group (solid content 10%) an isocyanate-based curing agent (solid content 75%) and compounding them in a mass ratio of 93:7.

The PET film on one side of the thermoplastic polyurethane layer fabricated in Example 1 was peeled off, the above coating liquid for the surface coating layer was applied thereto so that the thickness after drying would be 10 µm, thereby fabricating a multilayer film (base material layer) of Example 9.

### (Example 10)

A multilayer film (base material layer) of Example 10 was fabricated in the same manner as in Example 5 except that the coating liquid for the surface coating layer in Example 5 was applied onto the thermoplastic polyurethane layer fabricated in Example 3.

### (Example 11)

A multilayer film (base material layer) of Example 11 was fabricated in the same manner as in Example 5 except that the coating liquid for the surface coating layer in Example 5 was applied onto the thermoplastic polyurethane layer fabricated in Example 4.

### (Comparative Example 7)

A multilayer film (base material layer) of Comparative Example 7 was fabricated in the same manner as in Example 5 except that the coating liquid for the surface coating layer in Example 5 was applied onto the thermoplastic polyurethane layer fabricated in Comparative Example 4.

### (Comparative Example 8)

A multilayer film (base material layer) of Comparative Example 8 was fabricated in the same manner as in Example 5 except that the coating liquid for the surface coating layer in Example 5 was applied onto the thermoplastic polyurethane layer fabricated in Comparative Example 6.

### (Comparative Example 9)

A multilayer film (base material layer) of Comparative Example 9 was fabricated in the same manner as in Example 5 except that the coating liquid for the surface coating layer in Example 5 was applied onto the thermoplastic polyurethane layer fabricated in Comparative Example 1.

### (Comparative Example 10)

A multilayer film (base material layer) of Comparative Example 10 was fabricated in the same manner as in Example 5 except that the coating liquid for the surface coating layer in Example 5 was applied onto the thermoplastic polyurethane layer fabricated in Comparative Example 2.

### [Measurement and Evaluation of Various Physical Properties]

For each of the base material layer samples of the fabricated multilayer film, the stress relaxation property, the tensile characteristics, and the optical characteristics were measured in the same manner as for the above-mentioned thermoplastic polyurethane films, and for the tensile characteristics, the crack elongation of the surface coating layer, which is an index of crack resistance, was measured. In addition, the pasting workability of the multilayer film on the object to be protected was evaluated, as described below. The results are shown in Table 3 and Table 4. Note that, for the hardness in the tables, the values that were known at the time of preparation of the thermoplastic polyurethane layers are shown.

### <Crack Elongation of Surface Coating Layer>

The sample for measurement was cut into a width of 25 mm and a length of 100 mm, and fixed to a tensile tester (Autograph AG-X: manufactured by Shimadzu Corporation) so that the distance between the chucks was 50 mm. Subsequently, the sample was tensioned at a speed of 300 mm/min under a temperature condition of 23°C ± 2°C, and the elongation at which cracks begin to occur in the surface coating layer (crack elongation of surface coating layer) was measured.

### <Pasting Workability>

Each of the fabricated multilayer film samples was cut into 10 pieces with a width of 30 mm and a length of 100 mm. The PET on the thermoplastic polyurethane layer side was peeled off and an acrylic adhesive was applied, and three people were then asked to paste it on the curved surface of a door mirror of an automobile as the object to be protected. When all three people pasted the sample smoothly without generating wrinkles, it was rated as "Good", and when even one person could not paste the sample smoothly generating wrinkles, it was rated as "Poor".

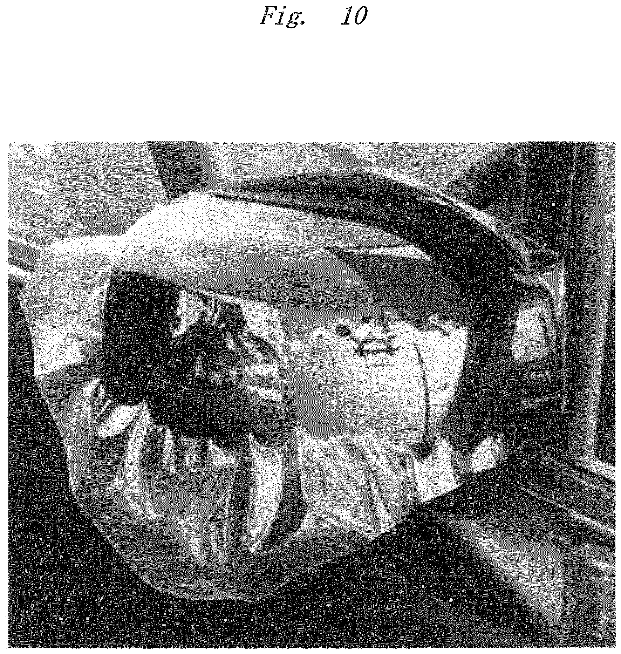

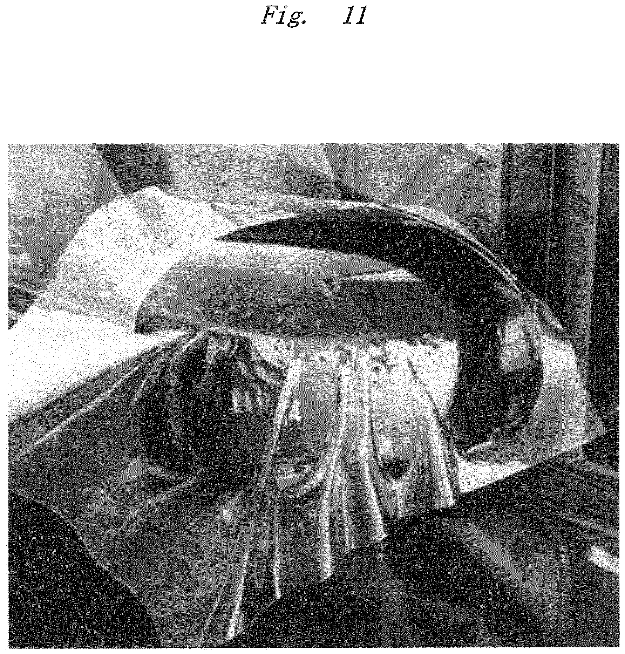

Note that, as an example, a photograph after the pasting of Example 5, whose pasting workability was evaluated as "Good", is shown in Figure 10, and a photograph after the pasting of Comparative Example 7, whose pasting workability was evaluated as "Poor", is shown in Figure 11.

**[Table 3]**

| | | | | | Example 5 | Example 6 | Example 7 | Example 8 | Example 9 | Example 10 | Example 11 |
|---|---|---|---|---|---|---|---|---|---|---|---|
| Configuration | Surface coating layer | | | | Fluorine-modified acrylic urethane resin A | Fluorine-modified acrylic urethane resin B | Modified acrylic urethane resin | Silicon-modified acrylic urethane resin | Silicon-fluorine copolymerize d resin | Fluorine-modified acrylic urethan e resin A | Fluorine-modified acrylic urethan e resin A |
| | Thermoplastic polyurethane layer | Isocyanate | | - | H₁₂MDI | | | | | H₁₂MDI | H₁₂MDI |
| | | Polyol | | - | Caprolactone | | | | | Ether | Adipate |
| | | Hardness | | Shore A | 95 | | | | | 88 | 90 |
| | | Thickness | | µm | 150 | 150 | 125 | 150 | 150 | 150 | 150 |
| Base msterial layer (surface coating layer/TPU layer) physical properties | | Stress relaxation property | 40% 3 min | % | 38,2 | 36,6 | 35,3 | 36,5 | 38,7 | 35,9 | 34,2 |
| | | | 40% 30 sec | N/25m m | 16,5 | 16,2 | 14,2 | 17,7 | 17,9 | 15,4 | 13,1 |
| | | Tensile characteristics | 10%Mo | N/25m m | 14,0 | 11,5 | 10,8 | 16,1 | 14,6 | 12,5 | 8,6 |
| | | | Crack elongation of coating layer | % | 103 | 96 | 122 | 101 | 82 | 88 | 100 |
| | | Optical characteristics | Total light transmittance | % | 92,29 | 92,27 | 92,46 | 92,25 | 94,50 | 92,32 | 92,11 |
| | | | Haze value | % | 1,00 | 1,30 | 0,92 | 1,79 | 34,41 | 2,09 | 1,19 |
| Evaluation | | Pasting workability | | - | Good | Good | Good | Good | Good | Good | Good |

**[Table 4]**

| | | | | | Comparative Example7 | Comparative Example8 | Comparative Example9 | Comparative Example10 |
|---|---|---|---|---|---|---|---|---|
| Configuration | Surface coating layer | | | | Fluorine-modified acrylic urethane resin A | Fluorine-modified acrylic urethane resin A | Fluorine-modified acrylic urethane resin A | Fluorine-modified acrylic urethane resin A |
| | Thermoplastic polyurethane layer | Isocyanate | | - | 1,4H6XDI | 1,4H6XDI | HDI | HDI |
| | | Polyol | | - | Caprolactone | Polycarbonate | Caprolactone | Ether |
| | | Hardness | | Shore A | 95 | 95 | 90 | 90 |
| | | Thickness | | µm | 150 | 150 | 150 | 150 |
| Base msterial layer (surface coating layer/TPU layer) physical properties | | Stress relaxation property | 40% 3 min | % | 28,3 | 30,2 | 22,9 | 23,5 |
| | | | 40% 30 sec | N/25mm | 32,8 | 28,7 | 35,6 | 30,0 |
| | | Tensile characteristics | 10%Mo | N/25mm | 25,8 | 21,7 | 26,5 | 21,8 |
| | | | Crack elongation of coating layer | % | 97 | 103 | 88 | 80 |
| | | Optical characteristics | Total light transmittance | % | 92,10 | 92,25 | 91,68 | 92,00 |
| | | | Haze value | % | 1,00 | 1,28 | 1,46 | 1,57 |
| Evaluation | | Pasting workability | | - | Poor | Poor | Poor | Poor |

As shown in Table 3 and Table 4, in the inventive base material layers of multilayer films of Examples 5 to 11, the percentage (%) of the load after 3 minutes with respect to the load immediately after the stopping was 34% or more, which is a value about 1.13 to 1.69 times higher than the numerical values of the thermoplastic polyurethane films of Comparative Examples. Therefore, it was found that the multilayer film having a thermoplastic polyurethane layer comprising polyurethane, which is a reaction product of H₁₂MDI as the polyisocyanate component, has an excellent stress relaxation property as the base material layer due to the excellent stress relaxation property of the thermoplastic polyurethane layer.

In addition, the base material layers of Examples 5 to 11 could be pasted smoothly on the object to be protected by all three people, while the base material layers of Comparative Examples could not be pasted smoothly. When viewing the photographs of Figure 10 and Figure 11, it can be seen that the sample of Example 5 was pasted smoothly on the door mirror in Figure 10 without generating wrinkles, whereas large wrinkles were generated in Comparative Example 7 in Figure 11.

Here, in the base material layers of Examples 5 to 11, both the value of residual stress in the stress relaxation property and the stress value in the tensile characteristics are 20 N/25 mm or less, whereas those of the base material layers of Comparative Examples 8 to 10 are larger than 20 N/25 mm. Therefore, it can be considered that, even when the surface coating layer was formed in Examples 5 to 11, their pasting workability was good. In addition, since all of the surface coating layers have a urethane bond, there was no cracks observed in the coat layers, and they followed the thermoplastic polyurethane film. Note that the optical characteristics were good in all examples, with a total light transmittance of 90% or more and a haze value of 3.0 or less.

Although embodiments and Examples of the present invention have been described in detail above, the thermoplastic polyurethane film and multilayer film of the present invention are not limited to the above embodiments and may include any technical ideas envisioned within the scope of the present invention.

### Industrial Applicability

The present invention can be used to protect adherends having curved surfaces, not only as painting protective sheets or surface protective sheets for preventing scratches caused by abrasions and flying stones on the exterior parts of vehicles such as automobiles and for preventing deterioration due to weather, but also as films that are pasted on curved surface parts of flexible liquid crystals and other devices to protect the screen. It can also be used as an alternative film to soft polyvinyl chlorides.

### Reference Signs List

10 Multilayer film
11 Thermoplastic polyurethane layer (thermoplastic polyurethane film)
12 Surface coating layer
13 Adhesive layer
a Adherend

## Claims

1. A thermoplastic polyurethane film comprising a thermoplastic polyurethane that is a reaction product obtained by using dicyclohexylmethane diisocyanate (H₁₂MDI).

2. The thermoplastic polyurethane film according to claim 1, wherein, when a value of loss tangent according to JIS K7244-4 is measured by raising a temperature from -60°C to a maximum of 60°C, this measured value satisfies conditions (1) and (2) below:
(1) a maximum value is exhibited under a temperature environment of 15 to 60°C; and
(2) a minimum value is exhibited under a temperature environment of 0°C or lower.

3. The thermoplastic polyurethane film according to claim 2, wherein, when the value of loss tangent according to JIS K7244-4 is measured by raising a temperature from -60°C to a maximum of 60°C, this measured value does not become smaller, but is constant or becomes larger, when a temperature is raised from 0 to 25°C.

4. The thermoplastic polyurethane film according to any one of claims 1 to 3, wherein a load (residual stress) 30 seconds after stopping at a state of 40% elongation under a temperature condition of 23°C ± 2°C is 20 N/25 mm or less, and a percentage of stress relaxation 3 minutes after stopping at the state is 25% or more.

5. The thermoplastic polyurethane film according to any one of claims 1 to 4, wherein a total light transmittance according to JIS K7361-1 is 90% or more.

6. The thermoplastic polyurethane film according to any one of claims 1 to 5, wherein a haze value according to JIS K7136 is 3.0 or less.

7. A multilayer film comprising a surface coating layer formed on one side of the thermoplastic polyurethane film according to any one of claims 1 to 6.

8. The multilayer film according to claim 7, wherein the surface coating layer has a urethane bond.

9. The multilayer film according to claim 7 or 8, wherein the multilayer film is used to protect an adherend having a curved surface.
